Europäisches Patentamt

European Patent Office

Office européen des brevets

(11) Publication number: **0 321 168**
**A2**

## (12) EUROPEAN PATENT APPLICATION

(21) Application number: 88311725.1

(22) Date of filing: 12.12.88

(51) Int. Cl.⁴: **F16D 65/22**

(30) Priority: 15.12.87 US 133006

(43) Date of publication of application:
21.06.89 Bulletin 89/25

(84) Designated Contracting States:
DE GB IT SE

(71) Applicant: LUCAS INDUSTRIES public limited
company
Great King Street
Birmingham, B19 2XF West Midlands(GB)

(72) Inventor: Urban, John Arhur
331, Horseshoe Court
Plainwell Michigan 49080(US)

(74) Representative: Waite, Anthony William et al
MARKS & CLERK Alpha Tower Suffolk Street
Queensway
Birmingham B1 1TT(GB)

(54) Air chamber mounting device.

(57) A cam actuated shoe drum brake has an improved mounting arrangement for the power unit that actuates the brake. The actuator for the brake includes a camshaft (35) rotatably journaled within a tube (36) that is affixed to the backing plate (22) and to which is affixed a mounting bracket (41) that mounts the power unit. The mounting bracket has a mounting portion (46A, 46B) for the power unit and is disposed at an angle to the axis of rotation of the brake drum (30) and also at an angle to a plane perpendicular to the axis of the drum. The arrangement is such that the mounting bracket (41) may be moved without necessitating disassembly of the brake or removal of the brake drum. The configuration of the mounting bracket is such as to provide enhanced strength whilst enabling the bracket to be of simple form.

FIG 2

## AIR CHAMBER MOUNTING DEVICE.

This invention relates to a mounting arrangement for the power unit of a brake, of which a pair of braking elements is actuated by a cam shaft having a lever fixed thereto and actuated by a power unit fixed relative to a support member by way of a mounting bracket. In commercial vehicle applications, the power unit may comprise an air cylinder or air chamber.

In such a brake, the mounting arrangement for the power unit can present certain difficulties. For example, it is necessary for the mounting bracket to be fixed relative to the support member and for the power unit to be mounted on the mounting bracket, usually by means of studs or bolts, and these have often been positioned so that their axes extend either parallel to the axis of rotation of the adjacent wheel, or alternatively, lie in a common plane that is perpendicular to this axis. As a result of this orientation, the natural vibrations about the wheel rotational axis can cause harmonic vibrations in the mounting assembly and associated difficulties.

An object of this invention, therefore, is to provide an improved mounting arrangement for the power unit of a brake, and particularly of the internal shoe drum brake, which is of simple and robust construction and alleviates the aforesaid difficulty.

According to the invention, there is provided a mounting arrangement for the power unit of a brake having a support member fixed relative to an associated braking member rotatable about a rotational axis, a pair of braking elements supported for movement relative to said support member between a retracted position and an engaged position with the braking member a cam shaft for actuating said braking elements and supported for rotation about an axis offset from said rotational axis, an actuating lever fixed to said cam shaft for rotating said camshaft to actuate said braking elements, said mounting arrangement including a mounting bracket fixed relative to said support member adjacent said lever, and providing means for attaching said power unit to the mounting bracket for actuating said cam shaft by way of said lever, said bracket comprising first and second mutually angled, planar elements and a third planar element integral with and perpendicular to both said first and second elements, said third element extending from an end region of said second element to beyond the junction between all of said first, second and third elements, said third element being inclined with respect to said rotational axis and providing said attachment means for attaching said power unit to said bracket.

The invention will now be described, by way of example, with reference to the accompanying drawings in which:-

Figure 1 is an elevational view of one embodiment of an internal shoe drum brake incorporating one form of the mounting arrangement of the invention, with the drum removed to show the construction more clearly:

Figure 2 is a cross-sectional view taken along line 2-2 of Figure 1;

Figure 3 is a side-elevation view showing the brake actuating lever and power unit mounting bracket and is taken generally in the direction of arrow 3 in Figure 2, and

Figure 4 is an enlarged cross-sectional view taken along the line 4-4 of Figure 1.

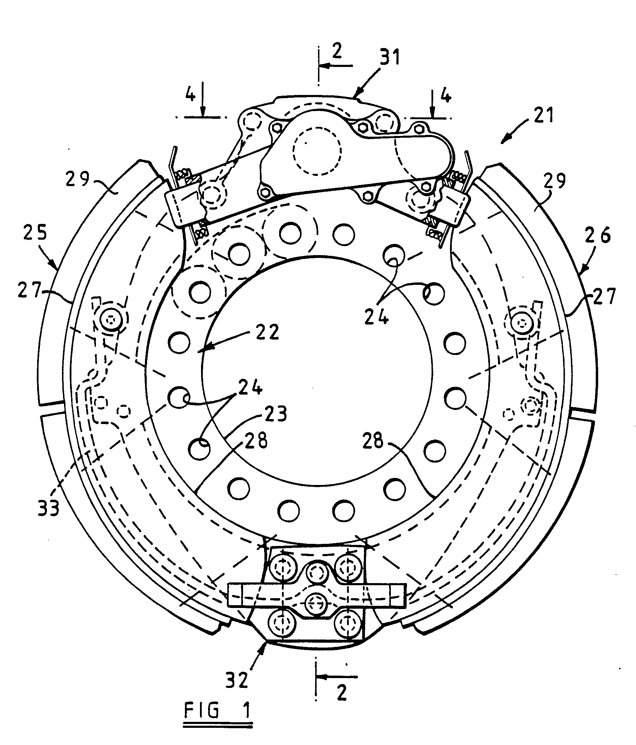

Referring to Figure 1, this shows an internal shoe drum brake designated generally by the reference numeral 21. The brake 21 has a backing or torque plate 22 in which is formed a central opening 23 defining a flange in which openings 24 are formed for mounting the backing plate 22 on an axle assembly (not shown) of a vehicle in a known manner. It should be understood that although the invention is described in conjunction with a vehicular application for the brake 21, the invention is susceptible for use with other applications.

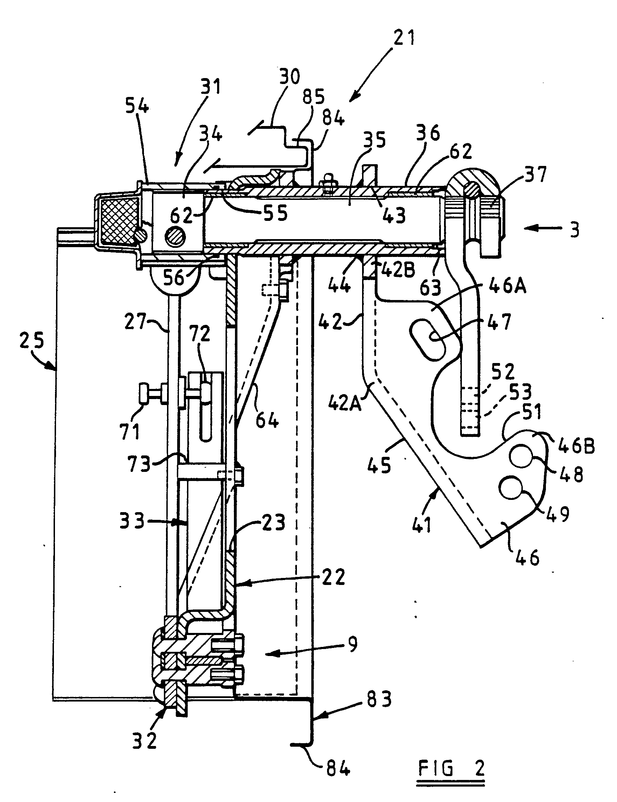

Slidably supported relative to the backing plate 22 in a manner to be described, are a pair of brake shoes 25 and 26, each of which includes a platform 27 carrying a friction lining material 29 and a transversley extending web 28. When the brake shoes 25 and 26 are actuated, the friction linings 29 will move outwardly into frictional engagement with an associated brake drum (shown only partially in Figure 2 at 30) for braking rotation of the brake drum and an associated wheel.

An actuator mechanism, indicated generally by the reference numeral 31 is carried by the backplate for actuating the brake shoes 25 and 26 in a manner which will be described. The actuator mechanism 31 is interposed between one pair of adjacent ends of the brake shoe webs 28, and a fixed abutment assembly, indicated generally by the reference numeral 32, is disposed between the opposite pair of adjacent ends of the brake shoe webs 28.

A formed return spring, indicated generally by the reference numeral 33, is carried by the fixed abutment 32 and cooperates with the brake shoes 25 and 26 so as to urge the brake shoes 25 and 25 towards their released or retracted positions.

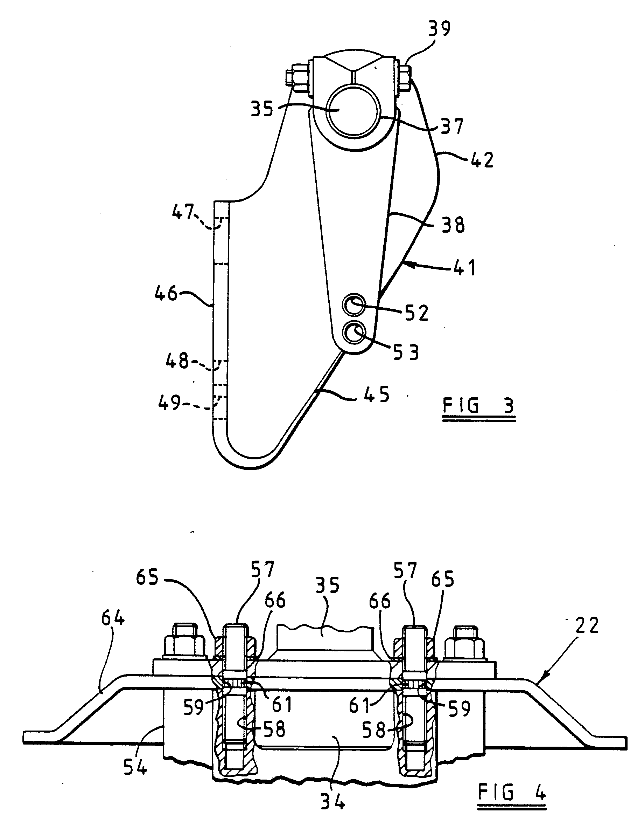

Referring now to Figures 2 and 3, the actuator 31 comprises a cam 34 that is fixed to or formed integrally with the camshaft 35 rotably supported within a tubular member 36 for rotation about an axis parallel to and offset from the axis of rotation of the associated brake drum 30. The camshaft 35 has a serrated or splined end portion 37 which extends outwardly from beyond the tubular member 36 on the side of the backing plate 22 away from the brake shoes 25 and 26, and an actuating lever 38 is fixed on this end portion 37 by means of clamping bolt 39.

A mounting bracket, illustrated for convenience in a non-functional position and indicated generally by the reference numeral 41, is provided for carrying a power unit (not shown) such as an air chamber device for operating the lever 38 and rotating the camshaft 35 to actuate the brakes, in a manner to be described. The mounting bracket 41 may be conveniently formed for example by pressing, from sheet metal and has a first planar leg 42 of which a planar extension 42B is apertured at 43 so as to pass over and closely surround the tubular member 36. The leg 42 is securely fixed to the tubular member 36 as by a weld 44.

The bracket leg 42 extends in a plane that is perpendicular to the axis of rotation of the brake drum. A second planar leg 45, integral with the leg 42, extends at an angle to the leg 42 and also at an angle to the axis of rotation of the associated brake drum 30. A third part of the bracket is in the form of a planar flange 46 integrally formed with the legs 42 and 45 and extending generally perpendicular to these two legs and generally parallel to the axis of rotation of the brake drum. The flange 46 extends from an end region of the leg 45 to beyond the junction 42A between the legs and said flange.

The flange 46 is formed with an elongate aperture 47 and a pair of apertures 48 and 49 so as to permit mounting of various size power units to the mounting bracket 41 or to permit mounting at different distances from the axis of the camshaft 35. The area between the elongate aperture 47 and the apertures 48 and 49 is relieved at 51 so as to pass the actuator rod which is connected to one of selected apertures 52 and 53 in the lever 38 for actuating the lever 38 and camshaft 35 in known manner.

It should be noted that the line connecting the aperture 47 and either the aperture 48 or the aperture 49 is inclined to a plane perpendicular to the axis of rotation of the brake drum 30 and also at an angle to the axis of rotation of the brake drum 30 so as to reduce the likelihood of breakage or weakening due to harmonic vibrations along the axis of rotation or perpendicular to that axis. Also, the orientation will facilitate removal or installation of the fastners that hold the power device to the mounting bracket 41 without interferring with the lever 38 or other components for facilitating servicing.

Moreover, the position of the junction 42A between the legs 42, 45 and flange 46 enhances the strength of the bracket 41 which as a result may be composed of simple planar sections, as illustrated.

The cam 34 is contained within an actuator housing 54 in which the actuator mechanism 31 is contained. The actuator housing 54 is provided with a cylindrical bore 55 into which a reduced diameter end portion of the tubular member 36 opposite to the lever 38 is fitted. An O-ring seal 56 is contained at this joint to provide a fluid-tight seal.

A dirt shield, indicated generally by the reference numeral 83 is fixed to the rear surface of the backing plate 22. The dirt shield 83 has a re-entrant flange 84 that is adapted to receive the peripheral edge 85 of the brake drum 30, as shown in figure 2, so as to effect a relatively dirt-free assembly.

The method of assembly and attachment will now be described by particular reference to Figure 4. The cam 34, camshaft 35 and actuator components are inserted within the actuator housing 54 and studs 57 are threaded into tapped openings 58 formed in the housing 54. This threaded connection has an interference fit so that once the studs 57 are fully inserted, they will be retained within the housing 54. Alternatively, free running threads with an adhesive or locking compound can be used. The entire assembly is then assembled onto the backing plate 22 with the studs 57 extending through enlarged openings 59 formed on the backing plate 22. It should be noted that the studs have serrated portions 61 which are spaced outwardly on the brake shoe side of the backing plate 22 during initial assembly.

The tubular member 36 is then inserted over the camshaft 35 into the tight fitting bore of the backing plate 22 and into the bore 55 of the housing 54. It should be noted that the tubular member 36 is provided with spaced bushings or bearings 62 that rotatably journal the camshaft 35 at it opposite ends. In addition, a lip-type seal 63 is provided at the outer end of the tubular member 36 so as to prevent the ingress of foreign material to the interior of the housing assembly.

The tubular member 36 has affixed to it, as by welding, a flange 64 which is formed with apertures through which pass the studs 57. Nuts 65 and lock washers 66 are then inserted over the studs 57 and threaded in place. As the nuts 65 are tightened, the flange 64 and tubular member 36 will be moved axially toward the backing plate 22 and the tubular member 36 will then sealingly engage the bore 55 of the housing 54. Once the bracket 64 engages the backing plate 22, further tightening of the nuts 65 will draw the housing 54 toward the backing plate 22 and the serrated portion 61 of the studs 57 will engage and lock with the torque plate 22 so as to form a rigid assembly. Once fully seated, the nut 65 will retain the parts together and the housing 54 and contained components will then be locked to the backing plate 22.

The tubular 36 may be subsequently removed by removal of the nuts 65 once the lever 38 has been removed so that the components may be serviced. During such removal, the housing 54 will be held in place by the serrated portion 61 of the studs 57 and, hence, it will be possible to remove the tubular member 36, mounting bracket 41 and power unit without removing the brake drum, which is not possible in some prior art constructions.

It should be readily apparent from the foregoing description that an improved drum brake mechanism is provided wherein the actuator device in the form of an air chamber or the like may be conveniently installed and removed without necessitating disassembly of the entire mechanism. In addition, the mounting bracket for the actuator mechanism is configured in such a way that sympathetic vibrations will not be generated in the mounting arrangement and, furthermore, that the mounting bracket may be removed and replaced without necessitiating the removal of the brake drum.

It is also to be understood that the foregoing description is that of a preferred embodiment of the invention and that various changes and modifications can be made without departing from the scope of the invention as defined by the appended claims. Although described in relation to a shoe drum brake, the invention may be applied to other forms of brake, such as disc brake.

## Claims

1. A mounting arrangement for the power unit of a brake having a support member (22) fixed relative to an associated braking member (30) rotatable about a rotational axis, a pair of braking elements (25, 26) supported for movement relative to said support member between a retracted position and an engaged position with the braking member, a cam shaft (35) for actuating the said braking elements and supported for rotation about an axis offset from said rotational axis, an actuating lever (38) fixed to said cam shaft (35) for rotating said cam shaft to actuate said braking elements said mounting arrangement including a mounting bracket (41) fixed relative to said support member (22)adjacent said lever (38) and providing means (46A, 46B) for attaching said power unit to the mounting bracket for actuating said cam shaft (35) by way of said lever (38), said mounting arrangement being characterised in that said bracket (41) comprises first and second mutually angled planar elements (42, 45) and a third planar element (46) integral with and perpendicular to both elements (42, 45), in that said third element (46) extends from an end region of said second element to beyond the junction (42A) between all of said elements (42, 45, 46) and in that said third element (46) is inclined with respect to said rotational axis and provides said attachment·means (46A, 46B) for attaching said power unit to said bracket.

2. A mounting arrangement according to Claim 1, characterised in that a part (42B) of said first element (42) extends beyond the third element (46) and forms an opening (43) receiving a support device (36) to which it is secured and which connects the bracket (41) to said support member (22).

3. A mounting arrangement according to Claim 1 or Claim 2 characterised in that that attachment means comprises a pair of spaced portions (46A, 46B).

4. A mounting arrangement according to Claim 2 or Claim 3, characterised in that said part (42B) of the first element is planar.

5. A mounting arrangement according to any one of Claims 2 to 4, characterised in that said support device is a tube (36) within which the cam shaft (35) is rotatably journalled.

6. A mounting arrangement according to Claim 5, characterised in that the support member is a backing plate (22) of a drum brake and the tube (36) is secured to the backing plate (22) by studs (57) which further secure an actuator housing (54) to the backing plate (22) on the side opposite to the mounting bracket (41), said housing containing a cam (34) of said cam shaft (35).

7. A mounting arrangement according to any one of the claims 3 to 6, characterised in that each portion (46A, 46B) contains at least one aperture (47, 48, 49) and respective ones of these apertures in said portions define a pair of mounting apertures for said power unit.

8. A mounting arrangement according to claim 7, characterised in that said pair of apertures (47, 48) or (47, 49) is inclined to said rotational axis and is also substantially parallel to the plane of the second element (45).

9. A brake having a power unit mounted in relation thereto by a mounting arrangement according to any one of Claims 1 to 8.

10. An internal shoe drum brake having a power unit mounted in relation thereto by a mounting arrangement according to any one of Claims 1 to 8.

FIG 1

EP 0 321 168 A2

FIG 2

39

35 37

42

47 38

41

46

52

53

45 FIG 3

65 57 35 57 65

64 66 66 22

59 61 61 59

54 58 58

34 FIG 4